# EUROPEAN PATENT APPLICATION

(11) **EP 4 640 920 A1**
(43) Date of publication of application: **29.10.2025**
(21) Application number: 23907906.4
(22) Date of filing: 16.11.2023
(51) Int. Cl.: C23C 22/20, C23C 22/22, C21D 8/12, C21D 9/46, H01F 1/147

(54) **INSULATION COATING FILM COMPOSITION FOR GRAIN-ORIENTED ELECTRICAL STEEL SHEET, PREPARATION METHOD THEREFOR, GRAIN-ORIENTED ELECTRICAL STEEL SHEET HAVING INSULATION COATING FILM FORMED ON SURFACE THEREOF BY USING SAME, AND MANUFACTURING METHOD THEREFOR**

(30) Priority: 21.12.2022 KR 20220180721
(71) Applicant: POSCO Co., Ltd, Pohang-si, Gyeongsangbuk-do 37859 (KR)
(72) Inventor: HAN, Min-Soo, Pohang-si, Gyeongsangbuk-do 37877 (KR); KO, Hyun-Seok, Pohang-si, Gyeongsangbuk-do 37877 (KR); HUH, Byung-Kook, Pohang-si, Gyeongsangbuk-do 37877 (KR); PARK, Gyeong-Ryeol, Pohang-si, Gyeongsangbuk-do 37877 (KR)
(74) Representative: Meissner Bolte Partnerschaft mbB
(86) International application number: PCT/KR2023/095082
(87) International publication number: WO 2024/136623

(57) **Abstract**

An insulation coating film composition for a grain-oriented electrical steel sheet, of the present invention, comprises, on the basis of 100 parts by weight of a metal phosphate, 10-250 parts by weight of colloidal silica, 0.5-5 parts by weight of cobalt hydroxide and 20-170 parts by weight of a powder. A method for preparing the insulation coating film composition for a grain-oriented electrical steel sheet, of the present invention, comprises the steps of: simultaneously injecting a metal oxide, cobalt hydroxide and a powder into phosphoric acid (H₃PO₄), and then heating same, thereby preparing a first composition comprising, on the basis of 100 parts by weight of a metal phosphate, 0.5-5 parts by weight of cobalt hydroxide and 20-170 parts by weight of a powder; and mixing the first composition with 10-250 parts by weight of colloidal silica. By using the insulation coating film composition for a grain-oriented electrical steel sheet, and the preparation method therefor, of the present invention, a grain-oriented electrical steel sheet with improved film tension and insulation properties can be obtained.

## Description

### Technical Field

The present disclosure relates to an insulation coating film composition for a grain-oriented electrical steel sheet, a preparation method therefor, a grain-oriented electrical steel sheet having an insulation coating film formed on a surface thereof by using the same, and a manufacturing method therefor, and more particularly, an insulation coating film composition for a grain-oriented electrical steel sheet having excellent film strength and insulation properties and excellent gloss and elegant color, a preparation method therefor, a grain-oriented electrical steel sheet having an insulation coating film formed on a surface thereof by using the same, and a manufacturing method therefor.

### Background Art

Generally, a grain-oriented electrical steel sheet may be a steel sheet including a large amount of silicon components, and may exhibit excellent magnetic properties in a rolling direction.

It is known that, by improving insulation properties by reducing iron loss of a grain-oriented electrical steel sheet, magnetic properties may be further improved. As for a currently commercialized grain-oriented electrical steel sheet, by using a difference in coefficients of thermal expansion between an insulation coating film (secondary coating film) formed on the steel sheet and a forsterite-based base coating film (primary coating film) and adding tensile stress to the steel sheet, the effect of reducing iron loss may be obtained. In relation to this, as one of methods for reducing iron loss of a grain-oriented electrical steel sheet, a method of forming a high-strength insulation coating film on the surface has been actively researched.

In particular, in relation to improving surface properties or imparting surface tension, a method of forming a primary coating film and an insulation coating film has been suggested. As a primary coating film, a forsterite (2MgO·SiO₂) layer formed by reaction between silicon oxide (SiO₂) generated on a material surface during a primary recrystallization annealing process of an electrical steel sheet material and magnesium oxide (MgO) used as an annealing separator has been known. The primary coating film formed during high-temperature annealing may need to have a uniform color without defects on an exterior, and functionally, fusion between sheets may be prevented in a coil state and tensile stress may be imparted to the material due to a difference in coefficients of thermal expansion between the material and the primary coating film, such that the effect of addressing iron loss of the material may be obtained.

Such a primary coating film may basically need to have a uniform color without defects on the material surface. However, since commercialized products are manufactured in large-scale coil form, it may be difficult to maintain uniform coating film properties throughout the entire coil length. The main cause of this may be an annealing separator including water.

That is, during the process in which the magnesium oxide slurry is applied to the steel sheet and wound into a coil and undergo a final finishing high-temperature annealing process, the amount of heat transferred from the annealing furnace to the coil may be different, and accordingly, the amounts of discharged hydration moisture may be different depending on the coil position and region, and accordingly, an oxidation defect, which is one of the defects caused by the rapid discharge of hydration moisture in the coil, may occur mainly in the outermost region. In particular, in the case of a secondary coating film formed with a general phosphate-based tension coating agent, the primary coating defect may be exposed as is due to insufficient shielding properties caused by high transparency. Accordingly, in the mass production process, the exposed defect region may be cut off and shipped, which may increase the unit price of the product.

As described above, the coil formed with tension coating, which is a secondary coating film, is slitted to an appropriate size and supplied in the form of a hoop, and may be manufactured as a core-type transformer and a wound core-type transformer depending on the purpose. Also, in order to improve efficiency when manufacturing a transformer, insulation properties between the sheets may be important, and generally, when the coating thickness is increased, insulation properties may be improved, but no-load loss may be reduced, such that transformer efficiency may be reduced.

To address this problem and to improve tension and insulation properties of a coating film, an insoluble material such as powder may be added to a coating agent in a general coating agent. However, when an insoluble material is added, roughness and gloss may be degraded, and technical problems such as voids in the coating film after the coating film is formed may arise.

Accordingly, a colored secondary coating film product of which the oxidation defect occurring in the primary coating film is addressed and which has excellent insulation properties even at a thin film coating thickness may be necessary, but in the case of a general grain-oriented electrical steel sheet coating agent, such conditions may not be satisfied, and thus, a commercialization technique therefor may be necessary.

Also, due to the recent strengthening of environmental regulations, the development of coating agents excluding chromium oxide has been actively conducted in an electrical steel sheet. In the case of a grain-oriented electrical steel sheet coating agent, colloidal silica having a functional group may be used to enhance weakened corrosion resistance and adhesion due to the absence of chromium oxide. However, directional coating agents mainly including phosphate or colloidal silica may still have limitations in overcoming corrosion resistance and weakened adhesion due to the absence of chromium oxide.

In the case of a non-chromium tensile coating agent for a grain-oriented electrical steel sheet, as disclosed in Japanese Laid-Open Patent Publication Tuk.Gae No. 2007-23329, a method of adding colloidal silica modified with Fe, Al, Ga, Ti, or the like, and as disclosed in Korean Patent Publication No. 10-2008-0025733, a method of improving corrosion resistance and coating film tension by adding oxide of Fe, Co, Cu, or the like, have been suggested. However, in the former case, the process of modifying colloidal silica by reacting with Fe, Al, or the like, may be considerably complicated and may have disadvantages in terms of manufacturing cost, while the effect thereof may not be sufficient, such that it may be difficult to be applied in the industry. In the latter case, the method may be easily used as compared to the former, but the added oxides may have a mechanism of improving density of the coating film or coating film tension by simply preventing free phosphate generated during drying of a coating agent, such that the method may have limitations in satisfying the level of a high-grade grain-oriented electrical steel sheet requiring high corrosion resistance and coating film tension. Accordingly, a commercialization technique for a non-chrome coating agent for directionality which may be satisfactory in all material properties has not yet been suggested.

### Detailed description of present disclosure

### Technical problems to solve

An aspect in the present disclosure is to provide an insulation coating film composition for a grain-oriented electrical steel sheet having excellent film strength and insulation properties, and having excellent gloss and elegant color, a preparation method therefor, and a grain-oriented electrical steel sheet having an insulation coating film formed on a surface thereof by using the same.

### Solution to Problem

According to an aspect of the present disclosure, an insulation coating film composition for a grain-oriented electrical steel sheet including 10 to 250 parts by weight of colloidal silica, 0.5 to 5 parts by weight of cobalt hydroxide and 20 to 170 parts by weight of powder based on 100 parts by weight of metal phosphate is provided.

According to another aspect of the present disclosure, a method of preparing an insulation coating film composition for a grain-oriented electrical steel sheet including preparing a first composition including 0.5 to 5 parts by weight of cobalt hydroxide and 20 to 170 parts by weight of powder based on 100 parts by weight of metal phosphate by simultaneously adding metal oxide, cobalt hydroxide and powder to phosphoric acid (H₃PO₄) and performing heating; and mixing 10 to 250 parts by weight of colloidal silica into the first composition is provided.

According to another aspect of the present disclosure, a grain-oriented electrical steel sheet having an insulation coating film formed on a surface using the insulation coating film composition of the present disclosure, and a manufacturing method therefor are provided.

### Advantageous Effects of Invention

According to the present disclosure, a coating film of a grain-oriented electrical steel sheet may have improved tensile and insulating properties, and also a grain-oriented electrical steel sheet having excellent magnetic properties may be effectively provided.

According to the present disclosure, by imparting beautified roughness to an insulation coating film of a grain-oriented electrical steel sheet, excellent gloss and elegant color may be imparted.

### Brief Description of Drawings

FIG. 1 may be an image obtained to evaluate corrosion resistance of a grain-oriented electrical steel sheet of prior art.
FIG. 2 may be an image obtained to evaluate corrosion resistance of an electrical steel sheet in the present disclosure.

### Best Mode for Invention

Hereinafter, the present disclosure is described in detail such that a person having an ordinary skill in the art to which the present disclosure belongs may easily implement the present disclosure. However, the present disclosure may be implemented in various different forms and is not limited to the embodiments described herein.

Generally, main components of the chromium-based insulation coating film composition may include colloidal silica, a coating agent, metal phosphate, chromium oxide, and a trace amount of additives for reinforcing other functions, which provide tension of the coating film. However, when chromium oxide is excluded from this composition, the drying rate may be degraded, and accordingly, insulating properties and tension-providing ability by coating may be degraded.

In the chromium-based insulation coating film composition, when the coating film is dried, hexavalent chromium (Cr⁶⁺) may react with water present in the coating agent and may be changed into H₂CrO₄ compound, and H₂CrO₄ may react with Fe present in the steel sheet and FeO may be generated. Accordingly, the state in which FeO and metal phosphate may react with each other may be obtained. This reaction may greatly contribute to improving adhesion between the steel sheet and the coating agent, and may thus contribute to improving tension of the coating film. Also, hexavalent chromium (Cr⁶⁺) may react with the generated FeO and may be reduced to trivalent chromium (Cr³⁺), and density of the coating film may increase by condensation polymerization of the reduced trivalent chromium (Cr³⁺), which may greatly affect improvement of tension of the coating film.

In the composition for forming an insulation coating film including chromium (Cr), as in formula (1) as below, chromium oxide may suppress generation of free phosphate, which causes poor adhesion after drying of the coating film, and may also improve reactivity of phosphate even at low temperature.

CrO₃ + 2H₃PO₄ → Cr(PO₄)₂ + 6H₂O (1)

Accordingly, it may be necessary to address degradation of corrosion resistance and adhesion of the composition for forming an insulation coating film excluding chromium oxide.

In the present disclosure, the problem of degradation of hygroscopicity and corrosion resistance occurring in the composition for forming an insulation coating film, which is non-chromium and includes phosphate, by adding chromium hydroxide and nano- or micro-sized fine carbon black and clay. In the present disclosure, by including nano- or microparticle carbon black and clay powder based on metal phosphate and colloidal silica with cobalt hydroxide added, a chromium-free insulation coating film composition for a grain-oriented electrical steel sheet having beautiful colored surface properties and excellent insulation even after being processed into a thin film less than general coating thickness, a preparation method therefor, a grain-oriented electrical steel sheet having an insulation coating film formed on a surface thereof by using the same, and a manufacturing method therefor may be provided.

Surface coating may be performed using an insulation coating film composition for a grain-oriented electrical steel sheet including a large amount of phosphate, degradation of hygroscopicity, erosion, and corrosion resistance due to free phosphate may occur over time. Accordingly, in order to reduce surface defects due to free phosphate, pure phosphate and metal oxide may need to be prepared at an appropriate molar ratio, and also a proportion of phosphate in the insulation coating film composition may be important.

As described above, in the present disclosure, it was confirmed that free phosphate was suppressed by adding cobalt hydroxide by 0.5 to 5 parts by weight based on 100 parts by weight of metal phosphate, based on solid content, and that a dense coating film was formed by adding powder by 20 to 170 parts by weight. Ultimately, it was revealed that cobalt hydroxide and powder replaced the function of suppressing free phosphate by the reaction between chromium oxide and phosphoric acid.

The insulation coating film composition for a grain-oriented electrical steel sheet according to an embodiment of the present disclosure may include, 10 to 250 parts by weight of colloidal silica, 0.5 to 5 parts by weight of cobalt hydroxide and 20 to 170 parts by weight of powder based on 100 parts by weight of metal phosphate.

Colloidal silica may increase strength and hardness of the coating film through an intramolecular network reaction when the coating film is dried after coating, and accordingly, colloidal silica may apply tension to the material by the coating film. Various colloidal silicas may be used as the colloidal silica without limitation, and for example, commercially available colloidal silica may be used. More specifically, basic colloidal silica may be used.

Generally, the insulation coating film composition for a grain-oriented electrical steel sheet may include chromium oxide to reinforce corrosion resistance after formation of the coating film and solid silica to adjust roughness and application properties of the coating film.

The insulation coating film composition for a grain-oriented electrical steel sheet may include colloidal silica by 10 to 250 parts by weight based on 100 parts by weight of metal phosphate, based on solid content. When the colloidal silica is included by less than 10 parts by weight, the tension improvement effect due to colloidal silica may not be sufficiently obtained, and when the colloidal silica is included by more than 250 parts by weight, the amount of metal phosphate may be relatively reduced, such that adhesion of the insulation coating film may be deteriorated. Further specifically, the insulation coating film composition for a grain-oriented electrical steel sheet may include colloidal silica by 100 to 200 parts by weight or 125 to 175 parts by weight based on 100 parts by weight of metal phosphate, based on solid content.

During the process of drying the coating film, colloidal silica may undergo a condensation reaction by a chain reaction of silica as in formula (2), and may form a network structure such as -(HO-Si-O-Si)-n.

-(HO-Si-OH-)n + -(HO-Si-OH-)n = -(HO-Si-O-Si-)n + H₂O (2)

However, the composition for forming an insulation coating film for electrical steel sheets including colloidal silica may form an excessively uniform network structure, and accordingly, density of the coating film may have limitations. Accordingly, there may be a limitation in providing adhesion and corrosion resistance between the electrical steel sheet material and the composition for forming an insulation coating film, and to reinforce this, metal phosphate and chromium oxide may be included.

The colloidal silica may have a particle size of 7 to 40 nm. When the particle size is less than 7 nm, compatibility with other components in the coating agent may be degraded, and viscosity of the coating agent may increase, and when the particle size is more than 40 nm, density of the coating film may decrease, such that corrosion resistance may decrease.

The solid fraction of the colloidal silica may be 25 to 55 weight%. When the solid fraction is less than 25 weight%, insulating properties may be degraded, and when the solid fraction is more than 55 weight%, compatibility may be degraded after the coating agent is prepared. More specifically, the solid fraction of the colloidal silica may be 45 to 50 weight%.

The Na+ content of colloidal silica may be 0.1 to 1.0 weight%. When the Na+ content is less than 0.1 weight%, density of the coating film may be degraded, and when the Na+ content is more than 1.0 weight%, compatibility between the components may be inhibited due to an increase in cations in the composition for forming an insulation coating film. More specifically, the Na+ content may be 0.3 to 0.7 weight%.

The pH of the colloidal silica may be 9.5 to 10.5. When the pH is less than 9.5 or more than 10.5, the pH difference between components other than colloidal silica in the composition for forming an insulation coating film may be extreme, which may cause phase separation. More specifically, the pH may be 9.5 to 10.0.

Viscosity of colloidal silica may be 3.5 to 6.5cp. When viscosity is less than 3.5cp, a problem may occur in application properties of the coating agent, and when viscosity is more than 6.5cp, a problem may occur in aging properties due to thickening when used for a long time. More specifically, viscosity of colloidal silica may be 4 to 6cp. Viscosity of colloidal silica may be measured using a Brookfield viscosity meter at a temperature of 20°C based on 30 weight% solid content of colloidal silica.

The specific gravity of colloidal silica may be 1.1 to 1.3. When the specific gravity is less than 1.1, it may be difficult to control the application amount of the composition for forming an insulation coating film, and when the specific gravity is more than 1.3, a sedimentation problem may occur after the composition for forming an insulation coating film is prepared. More specifically, the specific gravity of colloidal silica may be 1.15 to 1.25.

Metal phosphate may act as a binder in the composition for forming an insulation coating film. As for the metal phosphate, a preparation process in which a metal oxide is added to pure phosphoric acid (H₃PO₄) and reacted at 80°C or higher may be essential. In order to improve adhesion of metal phosphate, boric acid may be additionally added during the reaction process and held for 3 hours or more, thereby inducing a condensation reaction between magnesium metal phosphate and boric acid. The prepared metal phosphate may be strongly acidic.

The metal phosphate may be included by 50 to 70 weight% in solid content. When the solid content is less than 50 weight%, free phosphoric acid may increase in metal phosphate, which may cause surface absorption after metal phosphate is prepared, and when the solid content exceeds 70 weight%, solid content may be excessive as compared to pure phosphoric acid, such that poor reaction and precipitation may occur.

The metal phosphate and metal oxide may include various metals without limitation.

Specifically, the metal oxide may include one or more of magnesium oxide (MgO) and aluminum oxide (Al₂O₃). More specifically, the metal oxide may include magnesium oxide (MgO) and aluminum oxide (Al₂O₃).

Also, specifically, the metal phosphate may include one or more of first magnesium phosphate (Mg(H₂PO₄)₂) and first aluminum phosphate (Al(H₂PO₄)₃). More specifically, the metal phosphate may include first magnesium phosphate (Mg(H₂PO₄)₂) and first aluminum phosphate (Al(H₂PO₄)₃).

In this case, the metal phosphate may include 10 to 40 parts by weight of a first aluminum phosphate and 60 to 90 parts by weight of a first magnesium phosphate based on the total 100 parts by weight, based on solid content. When the metal phosphate includes less than 10 parts by weight of first aluminum phosphate, the effect of tension improvement by adding first aluminum phosphate may not be sufficient, and when the metal phosphate includes more than 40 parts by weight of first aluminum phosphate, the aluminum component may increase crystallization of silica, which may cause cracks in the insulation coating film. Specifically, the metal phosphate may include 15 to 35 parts by weight of first aluminum phosphate and 65 to 85 parts by weight of first magnesium phosphate based on the total 100 parts by weight, based on solid content, and more specifically, 20 to 30 parts by weight of first aluminum phosphate and 70 to 80 parts by weight of first magnesium phosphate.

In the case of a coating agent including colloidal silica and metal phosphate as main components, when chromium oxide is excluded, surface adhesion or powder precipitation due to free phosphate may be a problem as mentioned above. Accordingly, in the present disclosure, to address the problem and to find a material replacing the reaction between chromium oxide and free phosphate as in formula (1), the effectiveness was verified by applying a wide range of metal oxides or hydroxides. The materials used therein may include cobalt phosphate hydrate, nickel oxide, strontium peroxide, iron oxide, copper oxide, manganese oxide, cobalt hydroxide, strontium hydroxide, iron citrate hydrate, nickel hydroxide, ammonium ferric citrate, germanium dioxide, niobium oxide, molybdenum oxide, barium oxide, lanthanum oxide, tantalum oxide, yttrium oxide, or the like, and it was confirmed that cobalt hydroxide was most effective in improving precipitation of free phosphoric acid and density of the coating film when cobalt hydroxide replaced chromium oxide.

The insulation coating film composition for a grain-oriented electrical steel sheet in the present disclosure may include cobalt hydroxide by 0.5 to 5 parts by weight, particularly 2 parts by weight in a solid weight ratio, based on 100 parts by weight of metal phosphate. When the insulation coating film composition for a grain-oriented electrical steel sheet includes cobalt hydroxide by less than 0.5 parts by weight or more than 5 parts by weight, physical properties of the grain-oriented electrical steel sheet may not improve.

The powder may improve density, shielding properties, and tension of the coating film. Here, the notion that density may be improved may indicate that corrosion resistance may be improved by increasing density of the coating film, and the notion that shielding properties may be improved may indicate that transparency may be lowered to increase color and shielding performance, and the notion that tension of the coating film may be improved may indicate that the coefficient of thermal expansion of the coating film formed using the low coefficient of thermal expansion of the powder may be lowered such that tensile stress may be imparted to the material.

The insulation coating film composition for a grain-oriented electrical steel sheet may include 20 to 170 parts by weight of powder based on 100 parts by weight of metal phosphate, based on solid content. When the insulation coating film composition for a grain-oriented electrical steel sheet includes less than 20 parts by weight of powder based on 100 parts by weight of metal phosphate, voids may be hardly generated in the coating film after the coating film is formed, but the color of the coating film may be light and transparency may increase, such that the effect of shielding the primary coating film may be significantly reduced. Also, since tension applied by the material through the coating film is minimal, the effect of addressing iron loss by tension of the coating film may not be expected. When the composition for forming an insulation coating film includes more than 170 parts by weight of powder based on 100 parts by weight of metal phosphate, the solid fraction in the composition for forming an insulation coating film may increase, which may cause agglomeration and sedimentation between powders, and also, after the coating film is formed, voids may be formed in the interfacial surface of the powder, which may significantly degrade tension and insulating properties of the coating film. Accordingly, specifically, the insulation coating film composition for a grain-oriented electrical steel sheet may include 30 to 80 parts by weight of powder, more specifically, 40 to 60 parts by weight, based on solid basis.

The powder may include clay and carbide, and specifically, the clay may include one or more components selected from a group consisting of Al, Si, Mg, Na, Ca, K and Fe, and carbide may be carbon (C). More specifically, the clay may be montmorillonite, and the carbide may be carbon black.

The clay may include 15 to 45 weight% of Al, 40 to 70 weight% of Si, 0.1 to 5 weight% of Mg, and 1 to 10 weight% of Fe.

When the clay is included by less than 15 weight% of Al, the elastic modulus of the coating film may decrease, such that the effect of tension of the coating film may not be obtained, and when the clay is included by more than 45 weight%, electrical conductivity may increase, such that insulating properties of the coating film may be degraded. When the clay includes less than 40 weight% of Si, the effect of improving tension of the coating film may not be obtained due to the difference in coefficients of thermal expansion, and when the clay includes less than 70 weight% of Si, hardness of the coating film may increase, which may significantly degrade processability of the material. When the clay includes less than 0.1 weight% of Mg, affinity between water and powder in the coating solution may degrade, such that uniform dispersion of powder in the coating solution may degrade, and when the clay includes more than 5 weight% of Mg, the elastic modulus of the coating film may degrade, the effect of improving tension of the coating film may not be obtained. Also, when the clay includes less than 1 weight% of Fe, heat resistance properties may degrade after the coating film is formed, and when the clay includes more than 10 weight% of Fe, the specific gravity of the powder may be increased, which accelerates sedimentation of the powder, and may degrade corrosion resistance of the coating film.

The clay may be 5 weight% to 95 weight% based on the total mass of clay and carbide. When the clay ratio is less than 5 weight%, transparency of the coating film may increase, which may significantly reduce the shielding effect of the primary coating film, and when the clay ratio exceeds 95 weight%, hardness of the coating film may increase excessively, which may degrade processability of the product. Specifically, the clay ratio may be 7 weight% to 93 weight% based on the total mass of clay and carbide.

The average particle size of the clay and carbide may be 101 nm to 106 nm. When the average particle size of the clay and carbide is less than 101 nm, it may be difficult to be evenly dispersed in the solution due to electrostatic attraction of the particles, and when the size exceeds 106 nm, sedimentation may occur rapidly in the solution, such that it may be difficult to properly exhibit performance.

In addition to the aforementioned components, the insulation coating film composition for a grain-oriented electrical steel sheet may further include a solvent.

A method for preparing an insulation coating film composition for a grain-oriented electrical steel sheet according to an embodiment of the present disclosure may include simultaneously adding metal oxide, cobalt hydroxide, and powder to phosphoric acid (H₃PO₄) and performing heating, preparing a first composition including 0.5 to 5 parts by weight of cobalt hydroxide and 20 to 170 parts by weight of powder based on 100 parts by weight of metal phosphate, and mixing 10 to 250 parts by weight of colloidal silica into the first composition.

Each step will be described in detail as below.

In the case in which cobalt hydroxide and powder are added after the reaction between phosphoric acid and metal oxide is carried out first, viscosity of the metal phosphate may increase rapidly after the metal phosphate is prepared, and accordingly, even when cobalt hydroxide and powder are added here to induce mixing, cobalt hydroxide may not be dissolved in phosphate, and powder may not be evenly dispersed in the metal phosphate, and the particles may clump together.

In an embodiment of the present disclosure, by carry outing reaction between phosphoric acid and metal oxide by simultaneously adding metal oxide, cobalt hydroxide, and powder to phosphoric acid, cobalt hydroxide and powder may be added while viscosity of phosphoric acid is low as the reaction has not yet been carried out, such that a highly uniform phosphate/cobalt/powder mixture phase may be formed according to the flow induced by stirring, and a uniform metal phosphate/cobalt/powder mixture phase having higher viscosity may be gradually formed. Accordingly, dispersibility of the powder in the coating composition may be improved, such that shielding properties of the coating film may be greatly improved. Hereinafter, the uniform mixture of phosphate/cobalt/powder may be referred to as the first composition.

In an embodiment of the present disclosure, by simultaneously adding metal oxide, cobalt hydroxide, and powder to phosphoric acid (H₃PO₄) and performing heating, the first composition including 0.5 to 5 parts by weight of cobalt hydroxide and 20 to 170 parts by weight of powder based on 100 parts by weight of metal phosphate may be prepared.

In the preparing the first composition, the heating temperature may be 80°C or higher. When the heating temperature is lower than 80°C, reaction between metal oxide and cobalt hydroxide and phosphoric acid may not be smooth, such that it may be difficult to form metal phosphate, and in this case, even when stirring is carried out, the powder may not form a uniform mixture in the metal phosphate, and the particles may clump together.

The description of the metal oxide, metal phosphate, powder, oxide and carbon compound included in the powder and the description of the contents thereof have been described in relation to the colored coating composition for forming an insulation coating film of the electrical steel sheet described above, and thus, the overlapping description may not be provided.

In an embodiment of the present disclosure, 10 to 250 parts by weight of colloidal silica may be mixed in the first composition.

The description of colloidal silica and chromium oxide and the description of the contents thereof have been described in relation to the insulation coating film composition for a grain-oriented electrical steel sheet described above, and thus the overlapping description may not be provided.

Colloidal silica may be basic, and metal phosphate may be acidic. When the components are mixed, a temporary gelation may occur due to a significant pH difference between the two components, which may hinder formation of a dense coating film.

In an embodiment of the present disclosure, cobalt hydroxide may be used as a buffer to neutralize colloidal silica.

An electrical steel sheet according to an embodiment of the present disclosure may include an electrical steel sheet material and an insulation coating film positioned on one surface or both surfaces of the electrical steel sheet material, and as for the insulation coating film, a surface roughness (Ra) may be 0.5 µm or less, and a transparency of the coating film may be 20% or less.

The electrical steel sheet material may be a non-oriented electrical steel sheet in which an insulation coating film is not separately formed, a general grain-oriented electrical steel sheet having a primary coating film, or a glassless grain-oriented electrical steel sheet in which a primary coating film is not formed. In an embodiment of the present disclosure, the effect may be exhibited by the insulation coating film composition and the characteristics of the insulation coating film regardless of the components of the electrical steel sheet material. Also, the components of the grain-oriented electrical steel sheet material are described as below.

The grain-oriented electrical steel sheet material may include silicon (Si): 2.0 to 7.0 weight%, aluminum (Al): 0.020 to 0.040 weight%, manganese (Mn): 0.01 to 0.20 weight%, phosphorus (P): 0.01 to 0.15 weight%, carbon (C): 0.01 weight% or less (excluding 0%), nitrogen: 0.005 to 0.05 weight% and antimony (Sb), tin (Sn), or a combination thereof by 0.01 to 0.15 weight%, and a balance of Fe and inevitable impurities. Since the description of each component of the grain-oriented electrical steel sheet material is generally known, a detailed description thereof may not be provided.

A metal oxide layer (base coating layer, primary coating film) formed by reacting with an oxide layer of the annealing separator and the steel sheet during the secondary recrystallization process may be present between the grain-oriented electrical steel sheet material and the insulation coating film. An example of a metal oxide layer may be a forsterite layer. By preventing the formation of the metal oxide layer during the process of preparing the grain-oriented electrical steel sheet or by removing the metal oxide layer, the grain-oriented electrical steel sheet material and the insulation coating film may be in contact with each other.

When the surface roughness of the insulation coating film is excessively high, the gap ratio may increase during lamination of the material for transformer preparation, such that the efficiency of the transformer may degrade. The insulation coating film formed by the insulation coating film composition for a grain-oriented electrical steel sheet in the present disclosure may have excellent surface roughness. For example, the insulation coating film may have a surface roughness (Ra) of 0.5 µm or less.

Also, as for the insulation coating film, a transparency of the coating film may be 20% or less. The transparency of the coating film may be measured by reflectometry, and may be defined as the absolute intensity ratio (Ir/Ii) of the intensity of reflected light (Ir) to the intensity of incident light (Ii) with respect to the sample, or the reciprocal of (1/Rabs). That is, the transparency of the coating film may be 1/Rabs=Ir/Ii, and when the transmittance of the coating film is high and most of incident light is reflected, the transparency of the coating film may be close to 100%, whereas when the transmittance of the coating film is low and most of incident light is absorbed or scattered by the coating film, the transparency of the coating film may be close to 0%. When the transparency of the coating film is 20% or less, the coating film may be opaque, and most of light incident from the outside may be absorbed or scattered by the coating film, such that the original color of the sample under the coating film may not be distinguished, and accordingly, an excellent shielding effect may be obtained. Conversely, when the transparency of the coating film exceeds 20%, the shielding properties may deteriorate and the original color of the sample under the coating film may be distinguished, such that the purpose of present disclosure may not be achieved. Specifically, the transparency of the coating film may be 19% or less, and more specifically, the transparency may be 10% or less.

In the preparing the insulation coating film composition for a grain-oriented electrical steel sheet, by controlling the mixing order and mixing amount of clay and carbide, the above-mentioned transparency of the coating film value may be obtained.

The insulation coating film may include, by weight%, P: 6.0 to 45%, Si: 11 to 80%, Cr: 0.5 to 7%, Ti: 3 to 30%, N: 1.5 to 25%, C: 1.5 to 25% and a balance of oxygen and inevitable impurities.

The insulation coating film may include phosphorus (P) by 6.0 to 45% weight%. Phosphorus (P) may be derived from metal phosphate, carbide and nitride in the insulation coating film composition, or may be diffused from the electrical steel sheet material. When phosphorus (P) is included by less than 6.0 weight%, adhesion of the coating agent may be degraded, and when phosphorus (P) is included by more than 45 weight%, the coating film may become sticky after being formed. More specifically, the insulation coating film may include phosphorus (P) by 10 to 30 weight%.

The insulation coating film may include silicon (Si) by 11 to 60 weight%. Silicon (Si) may be derived from colloidal silica, carbide, and nitride in the insulation coating film composition, or may be diffused from electrical steel sheet material. When silicon (Si) is included by less than 11 weight%, the tension effect of the coating film due to silicon may be degraded, and when silicon (Si) is included by more than 60 weight%, hardness of the coating film may be excessively high, such that processability may be lowered. More specifically, the insulation coating film may include silicon (Si) by 20 to 40 weight%

The insulation coating film may include 0.5 to 7 weight% of cobalt (Co). Cobalt (Co) may be derived from chromium oxide in the insulation coating film composition or may be diffused from the electrical steel sheet material. When cobalt (Co) is included by less than 0.5 weight%, corrosion resistance may be degraded, and when cobalt (Co) is included by more than 7 weight%, viscosity of the coating agent may be increased, which may cause a problem in application properties. More specifically, the insulation coating film may include 1 to 6 weight% of chromium (Cr).

The insulation coating film may include 1.5 to 25 weight% of carbon (C). Carbon (C) may be derived from carbide and clay in the insulation coating film composition or may be diffused from the electrical steel sheet material during the process of forming the insulation coating film. When carbon is included by less than 1.5 weight%, the transparency of the coating film may increase, which may cause a problem of reduced shielding properties, and when carbon is included by more than 25 weight%, ash may be formed on the surface after the coating film is formed. More specifically, the insulation coating film may include 5 to 15 weight% of carbon (C).

The insulation coating film may include residual oxygen (O). In addition to the aforementioned Si, P, Cr, and Fe, other elements may be further included, and in this case, the elements may be included by substituting for oxygen (O). Specifically, the insulation coating film may include 35 to 75 weight% of oxygen.

The insulation coating film may further include one or more of Al: 1.5 to 12 weight% or Mg: 4.5 to 34 weight%.

The aforementioned Al, Mg, or the like, may be derived from metal phosphate added to the insulation coating film composition, and B may be derived from boron added to the insulation coating film composition. When Al and Mg are further added in the aforementioned range, adhesion may be further improved.

A method of manufacturing an electrical steel sheet according to an embodiment of the present disclosure may include applying an insulation coating film composition on one surface or both surfaces of an electrical steel sheet material; and forming an insulation coating film by drying the steel sheet on which the insulation coating film composition for a grain-oriented electrical steel sheet is applied.

Before the applying, the insulation coating film composition for a grain-oriented electrical steel sheet may be stored at a temperature of 10 to 30°C. When stored at a temperature below 10°C, viscosity may increase, such that it may be difficult to manage a uniform coating amount, and when stored at a temperature above 30°C, gelation of the insulation coating film composition for a grain-oriented electrical steel sheet may be accelerated, surface quality may be degraded. More specifically, the insulation coating film composition for a grain-oriented electrical steel sheet may be stored at a temperature of 15 to 25°C.

In the applying, the insulation coating film composition for a grain-oriented electrical steel sheet may be applied in a range of 0.5 to 6.0 g/m². When applied at less than 0.5 g/m², tension provided by the insulation coating film may be weakened, and when applied at more than 6.0 g/m², a thickness of the insulation coating film may excessively increase, and adhesion to the steel sheet and the space factor of the electrical steel sheet product may be deteriorated. More specifically, the insulation coating film composition for a grain-oriented electrical steel sheet may be applied in a range of 1.0 to 5.0 g/m².

In the forming the insulation coating film, drying may be carried out at 550 to 900°C for 10 to 50 seconds. When drying is performed beyond the temperature and time range, degradation of adhesion due to underdrying of the coating film may occur, or the problem of oxidation discoloration due to overdrying of the coating film may occur.

### Mode for the Invention

### Embodiment

Hereinafter, embodiments of the present disclosure will be described in detail. However, the embodiments are provided as an example, and the present disclosure is not limited to, and the present disclosure may only be defined by the scope of the claims to be described later.

A grain-oriented electrical steel sheet (300×60mm) including Si: 3.1% by weight ratio and having a primary coating film having a sheet thickness of 0.23mm, on which finish annealing was performed was prepared as a material.

An insulation coating film composition for a grain-oriented electrical steel sheet including 100 parts by weight of the components listed in Table 1 below and water was prepared. As for the preparation method, powder was added to metal phosphate with (A) or without (B, C) cobalt hydroxide, and heated to prepare the first composition, and colloidal silica was added to the first composition, mixed, and prepared, and compared with a general tension coating agent (D).

Powder was used to include montmorillonite and carbon black as carbide with clay.

The prepared insulation coating film composition for a grain-oriented electrical steel sheet was applied to the material at 4 g/m², and dried at 850°C for 30 seconds. As for corrosion resistance, the presence or absence of rust in a sample in a 5%, 35°C, NaCl solution was evaluated for 8 hours, and in this test, when the rust area was 5% or less, the sample was marked as excellent, when the rust area was 20% or less, the sample was marked as good, when 20-50%, the sample was marked as slightly defective, and if 50% or more, the sample was marked as defective.

The coating film properties of the samples were evaluated by the evaluation method as above, and the results are listed in Table 1.

**[Table 1]**

| Coati ng agent class ifica tion | Classificat ion | Metal phosphate (100g) | | Powder (g) | | Colloi dal silica (g) | Cobalt hydrox ide (g) | Chrom ium oxide (g) | Soluti on unifor mity | Adhes ion |
|---|---|---|---|---|---|---|---|---|---|---|
| | | Mg phospha te | Al phosph ate | Clay | Carbi de | | | | | |
| A | Comparative example 1 | 75 | 25 | 1 | 12 | 150 | - | - | Gelati on | Defec tive |
| | Comparative example 2 | | | 4 | 9 | | | | Gelati on | Defec tive |
| | Comparative example 3 | | | 9 | 4 | | | | Gelati on | Defec tive |
| | Comparative example 4 | | | 12 | 1 | | | | Gelati on | Defec tive |
| B | Comparative example 5 | 75 | 25 | 4 | 46 | 150 | 0.25 | - | Good | Defec tive |
| | Comparative example 6 | | | 15 | 35 | | | | Good | Defec tive |
| | Comparative example 7 | | | 35 | 15 | | | | Good | Defec tive |
| | Comparative example 8 | | | 46 | 4 | | | | Good | Defec tive |
| C | Inventive example 1 | 75 | 25 | 4 | 46 | 150 | 2.5 | - | Good | Good |
| | Inventive example 2 | | | 15 | 35 | | | | Good | Good |
| | Inventive example 3 | | | 35 | 15 | | | | Good | Good |
| | Inventive example 4 | | | 46 | 4 | | | | Good | Good |
| D | Comparative example 9 | 75 | 25 | | | 150 | | 5 | Good | Good |

| | | | | | | | | | | |
|---|---|---|---|---|---|---|---|---|---|---|
| *: The uniformity of the coating solution was evaluated as good/defective based on the powder dispersion condition within the solution immediately after the solution, and the compositions of the insulation coating film formed on the sample are listed in Table 2 below. | | | | | | | | | | |

**[Table 2]**

| Classifica tion | P | Si | Co | Al | Mg | Fe | C |
|---|---|---|---|---|---|---|---|
| Comparativ e example 1 | 27.7 | 28.5 | 2.8 | 7.3 | 20.9 | 0.03 | 12.8 |
| Comparativ e example 2 | 27.7 | 30.4 | 2.8 | 8.3 | 20.8 | 0.11 | 10.0 |
| Comparativ e example 3 | 27.7 | 33.8 | 2.8 | 10.0 | 21.0 | 0.25 | 4.4 |
| Comparativ e example 4 | 27.7 | 35.9 | 2.8 | 11. 0 | 21.0 | 0.33 | 1.11 |
| Comparativ e example 5 | 20.0 | 21.5 | 2.0 | 5.9 | 14.8 | 0.08 | 36.15 |
| Comparativ e example 6 | 20.0 | 26.9 | 2.0 | 8.5 | 14.9 | 0.30 | 27.7 |
| Comparativ e example 7 | 20.0 | 36.7 | 2.0 | 13.4 | 15.3 | 0.70 | 12.0 |
| Comparativ e example 8 | 20.0 | 42.2 | 2.0 | 16.1 | 15.4 | 0.92 | 3.21 |
| Inventive example 1 | 25.0 | 12.5 | 2.5 | 4.0 | 6.8 | 0.14 | 66.56 |
| Inventive example 2 | 25.0 | 22.3 | 2.5 | 8.9 | 7.1 | 0.55 | 51.2 |
| Inventive example 3 | 25.0 | 40.6 | 2.5 | 18.0 | 7.5 | 1.30 | 22.4 |
| Inventive example 4 | 25.0 | 51.0 | 2.5 | 23.1 | 7.8 | 1.73 | 6.03 |
| Comparativ e example 9 | 32.0 | 32.3 | 3.5 | 8.1 | 24.2 | - | - |

**[Table 3]**

| Preparin g method | Classifi cation | Insulati ng properti es a (mA) | Coating film transpare ncy G (%) | Whethe r void formed in coatin g film | Corrosio n resistan ce (%) | Coating tension (kgf/mm² ) | Coating tension after SRA (kgf/mm² ) |
|---|---|---|---|---|---|---|---|
| A | Comparat ive example 1 | 262 | 21 | X | 7.2 | 0.21 | 0.20 |
| | Comparat ive example 2 | 238 | 26 | X | 7.4 | 0.23 | 0.22 |
| | Comparat ive example 3 | 272 | 29 | X | 6.5 | 0.29 | 0.27 |
| | Comparat ive example 4 | 202 | 33 | X | 9.4 | 0.31 | 0.29 |
| B | Comparat ive example 5 | 33 | 9 | X | <0.1 | 0.35 | 0.36 |
| | Comparat ive example 6 | 12 | 11 | X | <0.1 | 0.65 | 0.62 |
| | Comparat ive example 7 | 11 | 12 | X | <0.1 | 0.72 | 0.70 |
| | Comparat ive example 8 | 5 | 13 | X | <0.1 | 0.88 | 0.84 |
| C | Inventiv e example 1 | 11 | 11 | O | 3.2 | 0.35 | 0.34 |
| | Inventiv e example 2 | 9 | 11 | O | 5.5 | 0.38 | 0.35 |
| | Inventiv e example 3 | 7 | 12 | O | 3.3 | 0.40 | 0.37 |
| | Inventiv e example 4 | 5 | 19 | O | 4.8 | 0.42 | 0.39 |
| D | Comparat ive example 9 | 250 | 95 | X | 4.5 | 0.33 | 0.25 |

As for corrosion resistance, the rust area of the sample was evaluated in a 5 weight%, 35°C, and NaCl solution for 8 hours and listed. Tension of the coating film by insulation coating film was evaluated by removing the insulation coating film formed on one surface of both surfaces, bending in one direction by adding tensile stress due to the insulation coating film formed on the remaining surface, and measuring the force required for the degree of bending.

Insulating properties were measured as the storage current value when a current of 0.5 V and 1.0 A was flowed under a pressure of 300 PSI.

Transparency of the coating film was measured by reflectometry.

As indicated in Table 1 to Table 3, it was confirmed that, when the composition of the insulation coating film is 15-45 weight%, and 40-70 weight% of Si, 0.1-5 weight% of Mg, and 1-10 weight% of Fe, and cobalt hydroxide are included, insulating properties, coating film shielding, corrosion resistance, tension of the coating film, and tension of the coating film after SRA were improved.

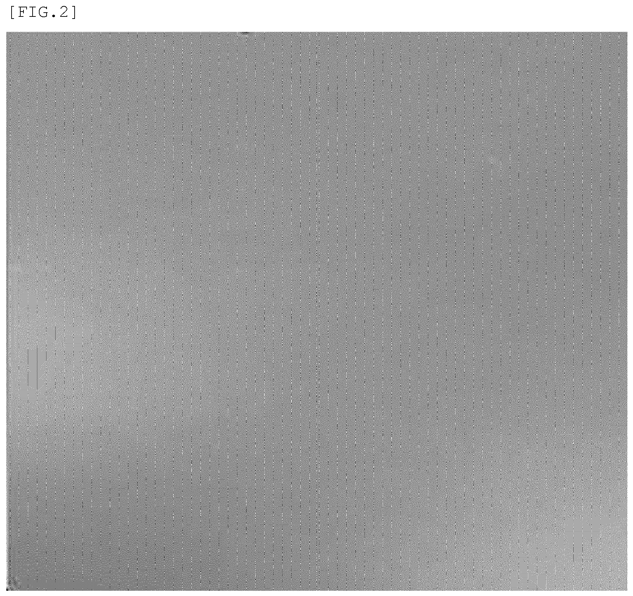

In particular, as for inventive example 3, a powder including 35 g of clay and 15 g of carbide were added, and in this case, tension of the coating film and the coating film shielding ratio before and after stress relieving annealing (SRA) were excellent as compared to the comparative examples and also to other inventive examples, and voids did not occur in the coating film after SRA, such that it was expected that workability may improve when a transformer is manufactured (FIG. 2). Also, referring to Table 1 and Table 3, it may be confirmed that tension of the coating film in comparative examples 7 and 8 was higher than that in comparative examples 5 and 6. In other words, it may be confirmed that tension of the coating film increased as the ratio of clay to carbide in the powder increased.

Referring to Table 3, in the case of comparative example 9 prepared by the method D of preparing a phosphate-based insulation coating film composition of prior art, it was confirmed that the coating tension before and after stress relief annealing (SRA) was deteriorated as compared to the invention example of the present disclosure. It was because the surface roughness was rough in the case of the phosphate-based coating agent, and the volume of the coating film was reduced due to crystallization of silica during heat treatment.

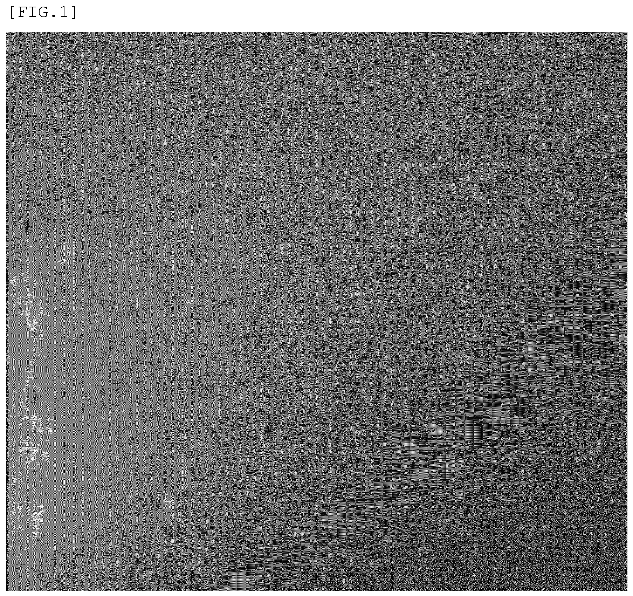

Referring to FIG. 1 and FIG. 2, it was confirmed that, when a secondary coating film was formed using the colored coating composition for forming an insulation coating film of an electrical steel sheet prepared in invention example 3 on a sample in which a primary coating film including a surface defect was formed, the formed secondary coating film had a highly uniform and smooth color and had an excellent function of shielding the surface defect of the primary coating film.

The present disclosure is not limited to the embodiments, and may be prepared in various different forms, and a person having general knowledge in the technical field to which the present disclosure belongs will be able to understand that the present disclosure may be implemented in other specific forms without changing the technical idea or essential features of the present disclosure. Thus, the embodiments described above should be understood as being exemplary and not restrictive in all aspects.

## Claims

1. An insulation coating film composition for a grain-oriented electrical steel sheet, the insulation coating film composition comprising:
10 to 250 parts by weight of colloidal silica, 0.5 to 5 parts by weight of cobalt hydroxide and 20 to 170 parts by weight of powder based on 100 parts by weight of metal phosphate.

2. The insulation coating film composition of claim 1, wherein the metal phosphate is prepared by adding metal oxide to phosphoric acid (H₃PO₄) and performing heating.

3. The insulation coating film composition of claim 2, wherein the metal oxide includes one or more of magnesium oxide (MgO) and aluminum oxide (Al₂O₃).

4. The insulation coating film composition of claim 1, wherein the powder includes clay and carbide.

5. The insulation coating film composition of claim 4, wherein the clay includes one or more elements selected from a group consisting of Al, Si, Mg, Na, Ca, K and Fe, and the carbide is carbon (C).

6. The insulation coating film composition of claim 4, wherein the clay is 5 weight% to 95 weight% based on a total weight of the powder.

7. The insulation coating film composition of claim 1, wherein the metal phosphate includes 10 to 40 parts by weight of a first aluminum phosphate and 60 to 90 parts by weight of a first magnesium phosphate based on a total of 100 parts by weight, based on solid content.

8. A method of preparing an insulation coating film composition for a grain-oriented electrical steel sheet, the method comprising:
preparing a first composition including 0.5 to 5 parts by weight of cobalt hydroxide and 20 to 170 parts by weight of powder based on 100 parts by weight of metal phosphate by simultaneously adding metal oxide, cobalt hydroxide and powder to phosphoric acid (H₃PO₄) and performing heating; and
mixing 10 to 250 parts by weight of colloidal silica into the first composition.

9. The method of claim 8, wherein a heating temperature is 80°C or higher.

10. An electrical steel sheet, comprising:
an electrical steel sheet material; and
an insulation coating film positioned on one surface or both surfaces of the electrical steel sheet material,
wherein, as for the insulation coating film, a surface roughness (Ra) is 0.5 µm or less and a transparency of the coating film is 20% or less.

11. A method of manufacturing an electrical steel sheet, the method comprising:
applying an insulation coating film composition for a grain-oriented electrical steel sheet prepared by the method recited in claim 1 on one surface or both surfaces of an electrical steel sheet material; and
forming an insulation coating film by drying a steel sheet to which an insulation coating film composition for a grain-oriented electrical steel sheet is applied.

12. The method of claim 11, wherein the method further includes storing the insulation coating film composition for a grain-oriented electrical steel sheet at a temperature of 10 to 30°C before the applying.

13. The method of claim 11, wherein the applying includes applying the insulation coating film composition for a grain-oriented electrical steel sheet in a range of 0.5 to 6.0 g/m².

14. The method of claim 11, wherein, in the forming an insulation coating film, drying is performed at 550 to 900°C for 10 to 50 seconds.
